# EUROPEAN PATENT APPLICATION

(11) **EP 3 569 495 A1**
(43) Date of publication of application: **20.11.2019**
(21) Application number: 19175011.6
(22) Date of filing: 16.05.2019
(51) Int. Cl.: B64C 1/14, B61D 25/00

(54) **AIRCRAFT CABIN WINDOW SEALED ENCLOSURE**

(30) Priority: 17.05.2018 US 201862672760 P
(71) Applicant: Bombardier Inc., Dorval, Québec H4S 1Y9 (CA)
(72) Inventor: MONFETTE, Stephane, Lachine, Québec H8T 3N8 (CA)
(74) Representative: Holmes, Matthew William

(57) **Abstract**

A window arrangement 16 for a vehicle subject to pressure changes may include a first transparent member (18) and a second transparent member (20) spaced apart from one another. A flexible seal (24) may be interposed between the first transparent member (18) and the second transparent member (20). A hermetically sealed variable volume enclosure is sealed (28) off from a cabin interior. The hermetically sealed variable volume enclosure (28) may be bounded by the first transparent member (18), the second transparent member (20), and the flexible seal (24) joining the first transparent member (18) and the second transparent member (20) around a perimeter thereof. The flexible seal (24) may have an elastically mobile body structured and arranged to permit relative movement between the first transparent member (18) and the second transparent member (20) to change a volume of the enclosure in response to a pressure change in the cabin interior to equalize a pressure differential between the enclosure and the cabin interior.

## Description

### TECHNICAL FIELD

The present disclosure relates generally to a window arrangement for a vehicle subject to pressure changes, and more particularly to a sealed window enclosure that reduces condensation on an aircraft cabin window and a method for reducing condensation on an aircraft cabin window with such an enclosure to minimize the formation of fog or frost. This application claims priority from US Provisional Patent Application No. 62/672,760, filed 17th May 2018, the entire contents of which are expressly incorporated by reference herein.

### BACKGROUND

Certain types of vehicles subject to air pressure changes, such as aircrafts, include window arrangements having air disposed within a window interspace. As air pressure within the vehicle decreases, the air within the interspace is drawn out and directed into the interior of the vehicle. As pressure increases within the interior of the vehicle the air therein expands and air flows back into the window interspace to equalize pressure. Such transfer of air within the window interspace can result in varying levels of absolute humidity within the window interspace. If the temperature of the window arrangement is reduced to or below the dew point, then fog and/or frost can form on panes of the window arrangement.

This problem is particularly evident in an aircraft including a plurality of windows. Aircraft windows must satisfy various requirements such as a clear visibility from the cabin to the outside and a structural integrity capable of maintaining the air pressure inside the cabin. The windows of modern aircrafts conventionally feature a fail-safe design typically based on a double-pane construction including two window panes spaced apart from one another with an interspace in between filled with air, or a three-pane construction where a scratch pane is incorporated between the inner structural pane and a cabin interior to prevent passengers from accessing the structural panes. Aircraft windows constituted by an outer pane and an inner (or middle) pane are fixed in a window frame by a sealing ring. The multi-pane construction is provided for reliability so that, if the outer pane should rupture during flight, the inner or middle pane will act as a redundant pane to prevent depressurization of the interior cabin of the aircraft.

During flight, the air within the aircraft cabin is pressurized. As a result, the windows in the aircraft experience cyclic loading each time the cabin internal pressure changes in response to the altitude. This cyclic loading may lead to premature failure of the window panes, an outward deflection of the outer window pane, and/or a displacement of the sealing ring in areas around the pane edges. Traditional aircraft windows may be designed to address these problems by compressing the inner and outer panes tightly against the sealing ring to immobilize the panes as a structural, modular unit.

Conventionally, windows having interspaces or cavities defined by window panes must be vented to the cabin for pressure regularization during flight, and especially during the ascent and descent phases of the flight. In order to achieve a pressure equalization in the window interspace, a ventilation hole is typically provided in the inner window pane or in a middle window pane of a three-pane construction. If the inner or middle pane was sealed (e.g., no vent hole or other means to expel gas from the interspace), the pressure in the cabin acts on the inner or middle pane, stressing the same and greatly increasing the risk of failure. The vent hole provides an opening from the cabin interior into the window interspace. As the aircraft ascends, cabin pressure reduces, and thus air is vented out of the window interspaces to stabilize internal air pressure levels. When the aircraft descends, cabin pressure increases, and air migrates back into the window cavities. Moisture levels in cabin air can increase during flight, for example, due to the number of passengers on board, or the use of humidifiers, and/or showers and other bathroom facilities during flight. When this moist air passes back into the window cavities, for example, during a decrease in altitude, fog and/or frost can rapidly form within the window arrangement. This can negatively affect passenger comfort in that views are obscured and can even present a safety hazard when certain flight conditions require clear window visibility.

Some other approaches employed to reduce the formation of fog and frost on windows involve heating the windows to prevent condensation, while others utilize anti-fog coatings or a desiccant system. Heated systems can be high in power consumption, can add unnecessary weight and complexity to the aircraft, and can affect passenger comfort through heat exposure. Anti-fog coatings may induce optical distortions and may be ineffective at low temperatures. Desiccant systems require installation of lines and cartridges, and need regular maintenance to replace the desiccant cartridges. These systems add additional cost to the aircraft.

Accordingly, conventional anti-fogging and anti-frosting solutions currently available have not been found suitable for a window arrangement of a vehicle subject to pressure changes.

Overcoming these concerns would be desirable.

### SUMMARY

Aspects of the invention provide a window arrangement, an aircraft and a method as claimed in the appended claims. According to embodiments of the present disclosure, there is provided a window arrangement of a vehicle subject to pressure changes, an aircraft having such a window arrangement, and a method for reducing condensation on a window arrangement of a vehicle subject to pressure changes.

According to a first aspect, there is provided a window arrangement for a vehicle subject to pressure changes, the window arrangement including a first transparent member and a second transparent member spaced apart from one another. A flexible seal may be interposed between the first transparent member and the second transparent member. A hermetically sealed variable volume enclosure may be bounded by the first transparent member, the second transparent member, and the flexible seal. The hermetically sealed variable volume enclosure may define a resting enclosure distance between mutually opposite surfaces of the first transparent member and the second transparent member. The variable volume enclosure may be filled with a dry gas and may be hermetically sealed off from an external environment and an interior of the vehicle. Thus, there is no gas exchange between the enclosure and the interior of the vehicle and between the enclosure and the external environment. The first transparent member and the second transparent member may be movable relative to one another via the flexible seal to change an enclosure distance between the first transparent member and the second transparent member in response to a pressure change in the cabin interior.

The first transparent member may be an outboard window pane and the second transparent member may be an inboard window pane. The outboard window pane may include a single layer construct or a multi-layer construct. For example, the outboard window pane may be a structural window pane having a single ply structure or a laminate structure having at least two plies laminated together using a flexible adhesive.

The window enclosure may be sealed with gas purged substantially of moisture (e.g., dry air, nitrogen, and/or argon) and may provide a thermal barrier between the outboard window pane and the inboard window pane where no or relatively low moisture is present to condense or freeze, thereby maintaining the temperature of the inboard surface of the inboard window pane at or above the dew point of the cabin air. This facilitates the prevention of undesirable condensation from forming on the inboard window pane, providing a clear view through the window. Further, the formation of fog and frost on the inboard surface of the outboard window pane is reduced or prevented due to the dry environment maintained within the enclosure facilitated by the fixed amount (e.g., mass) of gas contained therein.

A change in air pressure within the interior of the vehicle is compensated by a change in volume of the window enclosure. The change in volume of the variable volume enclosure is facilitated by the structure and arrangement of the flexible seal. The change in volume within the window enclosure in response to a pressure change within the vehicle interior facilitates a pressure equalization between the window enclosure and the vehicle interior. By varying the volume of the window enclosure, the pressure load from the vehicle interior is directed onto the outboard window pane and avoids stressing the inboard window pane. Accordingly, the structural integrity of the window arrangement is preserved at acceptable levels as the outboard window pane still bears the load of the pressure within the vehicle interior and the inboard window pane provides a fail-safe for increased reliability.

The flexible seal may have an elastically mobile body structured and arranged to permit the relative movement between the first transparent member and the second transparent member by the displacement distance. The flexible seal provides a sealed connection at the perimeter of the first transparent member and the second transparent member, and extends and contracts to maintain the sealed connection during expansion and compression movements of the sealed enclosure.

According to an implementation, the flexible seal may be a bellows member having a concertinaed body. For example, the bellows member may include a plurality of convolutions defining ridge-like folds and valley-like folds. According to another implementation, the flexible seal is a closed-cell foam that has bellows-like characteristics that permit a significant degree of movement for expansion and contraction movements.

A retaining member may surround the external periphery of the flexible seal to guide it during extension and contraction movements. The retaining member may restrain the flexible seal to translational movements in an inboard and outboard direction.

Pursuant to an implementation, the flexible seal is structured and arranged to permit a change in the enclosure distance of approximately 15-25%. According to a further implementation, the change is approximately 16-23%. The change of the enclosure distance may be an increase or a decrease in relative distance between the first transparent member and the second transparent member.

The first transparent member and/or the second transparent member may be movable translationally in an inboard and outboard direction in response to a pressure change. According to an implementation, the second transparent member is disposed inboard of the first transparent member and moves translationally in an inboard direction via the flexible seal to increase the enclosure distance by a displacement distance in response to a pressure decrease within the cabin interior. The translational movement of the second transparent member may be a linear movement, and/or the second transparent member may move translationally as a unit by the displacement distance. The first transparent member may remain substantially in the same position during the translationally movement of the second transparent member.

The displacement distance correlates with a predefined change in volume within the window enclosure. An increase of relative distance between the first transparent member and the second transparent member by the displacement distance correlates to an increase in volume within the window enclosure, and a decrease in relative distance between the first transparent member and the second transparent member by the displacement distance correlates to a decrease in volume within the enclosure. Pursuant to an implementation, the flexible seal is structured and arranged to permit a volume change of approximately 10-25% from a resting volume. Pursuant to a further implementation, the flexible seal is structured and arranged to permit a volume change of 15-25% from a resting volume, in particular approximately 15-20%.

According to a second aspect, there is provided an aircraft including a fuselage defining a cabin interior subject to pressure changes and at least one window arrangement incorporated into the fuselage of the aircraft. The at least one window arrangement may be suspended within a frame mounted to the fuselage. The at least one window arrangement includes an inboard transparent member and an outboard transparent member spaced from one another, a flexible seal interposed between the inboard transparent member and the outboard transparent member, and a hermetically sealed gas-filled variable volume enclosure sealed off from the cabin interior. The flexible seal joins the inboard transparent member and the outboard transparent member around a perimeter thereof, and may have an elastically mobile body structured and arranged to permit relative movement between the inboard transparent member and the outboard transparent member. The variable volume enclosure is bounded by the inboard transparent member, the outboard transparent member, and the flexible seal that provides a sealed connection at the perimeter of the inboard transparent member and the outboard transparent member. The flexible seal is structured and arranged to maintain the sealed connection for an inboard and outboard movement of the inboard transparent member to change a volume of the variable volume enclosure in response to a pressure change in the cabin interior.

Pursuant to an implementation, the variable volume enclosure defines a first volume in a first position where the inboard transparent member is spaced from the outboard transparent member by an initial enclosure distance, and a second volume in a second position where the inboard transparent member is displaced from the outboard transparent member by a displacement distance.

The inboard transparent member moves translationally as a unit between the first position and the second position in response to the pressure change in the cabin interior. The translational movement may be a linear movement in an inboard and outboard direction.

The inboard transparent member may be displaced inwards by the displacement distance from the first position to the second position to increase the volume of the variable volume enclosure in response to a pressure decrease in the cabin interior. Additionally or alternatively, the inboard transparent member may be displaced outwards by the displacement distance from the second position to the first position to decrease the volume of the variable volume enclosure in response to a pressure increase in the cabin interior. The distance between the first position and the second position may be approximately 15-25%. Pursuant to a further implementation, the displacement distance is approximately 16-23%.

Pursuant to an implementation, the at least one window arrangement includes a pressure safety valve configured to open a passage between the variable volume enclosure and the cabin interior in response to a pressure change within the variable volume enclosure exceeding a predefined pressure threshold. The predefined pressure threshold may be a pressure change of approximately 25%.

During flight, when the air pressure within the cabin interior reduces, for example during an ascent phase, the volume within the enclosure increases (and the pressure within the enclosure decreases) to stabilize internal air pressure levels within the enclosure and the cabin interior. When the air pressure within the cabin interior increases, for example during a descent phase, the volume within the enclosure decreases (and the pressure within the enclosure increases), to stabilize internal air pressure levels within the enclosure and the cabin interior. The change in volume within the enclosure correlates to a change in relative distance between the inboard transparent member and the outboard transparent member.

According to a third aspect, there is provided a method for reducing condensation on a cabin window arrangement of a vehicle subject to pressure change, the method including providing a hermetically sealed enclosure containing a fixed amount of gas bounded by an inboard pane and an outboard pane sealingly connected via a flexible seal; expanding a distance between the inboard pane and the outboard pane to increase a volume of the hermetically sealed enclosure in response to a decrease in air pressure within an interior of the vehicle; and compressing the distance between the inboard pane and the outboard pane to reduce the volume of the hermetically sealed enclosure in response to an increase in air pressure within the interior of the vehicle.

According to an implementation, expanding the distance between the inboard pane and the outboard pane to increase the volume of the enclosure includes displacing the inboard pane inwards from the outboard pane along an inboard translational movement by a displacement distance to increase the volume of the hermetically sealed enclosure proportionally to the decrease in air pressure within the interior of the vehicle. Additionally or alternatively, compressing the distance between the inboard pane and the outboard pane to decrease the volume of the enclosure includes displacing the inboard pane outwards from the cabin interior towards the outboard pane along an outboard translational movement by a displacement distance to decrease the volume of the hermetically sealed enclosure proportionally to the increase in air pressure within the interior of the vehicle. The volume within the enclosure may change by approximately 15-25% between the expanded and compressed states.

Implementations of the disclosure may include combinations of the above-described features. Details of these and other aspects of the disclosure will be apparent from the following discussion of but one non-limiting example of a cabin window sealed enclosure for a vehicle subject to pressure changes, such as an aircraft.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

Embodiments of the present invention will now be described, by way of example only, with reference to the accompanying drawings, in which:
FIG. 1 illustrates a perspective view of a vehicle subject to pressure changes incorporating a window arrangement of the present disclosure;
FIG. 2 illustrates a front view of a window arrangement of the vehicle of FIG. 1;
FIG. 3 illustrates a schematic cross-sectional view of the window arrangement of FIG. 2 taken along section line 3-3 to show an example of a sealed variable volume enclosure;
FIGS. 4A and 4B illustrate a schematic cross-sectional view of the window arrangement of FIG. 3, wherein FIG. 4A represents an example of the sealed variable volume enclosure in a first position and FIG. 4B represents an example of the sealed variable volume enclosure in a second position;
FIG. 5 illustrates a schematic representation of a window arrangement of the vehicle of FIG. 1 according to one implementation; and
FIG. 6 is a flow chart illustrating an example method for reducing condensation on a window arrangement of a vehicle subject to pressure changes.

### DETAILED DESCRIPTION

In the drawings, where like numerals and characters indicate like or corresponding parts throughout the several views, example illustrates are shown in detail. Although the drawings represent illustrations, the drawings are not necessarily to scale and certain features may be exaggerated to better illustrate and explain an innovative aspect of an example. Further, the example illustrations described herein are not intended to be exhaustive or otherwise limiting or restricted to the precise form and configuration shown in the drawings and disclosed in the following detailed description. The various features of the example approaches illustrated and described with reference to any one of the figures may be combined with features illustrated in one or more other figures, as it will be understood that alternative illustrations that may not be explicitly illustrated or described may be able to be produced. The combinations of features illustrated provide representative approaches for typical applications. However, various combinations and modifications of the features consistent with the teachings of the present disclosure may be desired for particular applications or implementations.

An example window arrangement having a hermetically sealed variable volume enclosure for a vehicle subject to pressure changes, such as an aircraft, is described herein.

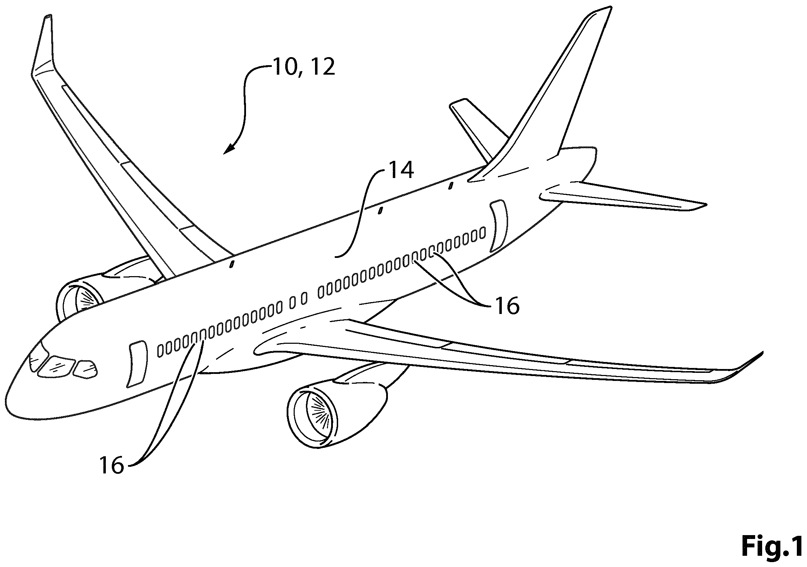

Referring now to FIG. 1, there is shown a vehicle subject to pressure changes generally at 10. In the illustrated example, the vehicle 10 is an aircraft 12 and includes a body or a fuselage 14 (hereafter "fuselage 14") that defines an outside mold line (e.g., an exterior surface shape of the fuselage 14) of the vehicle 10 or the aircraft 12. Also shown is a plurality of window arrangements 16, particularly a plurality of cabin window arrangements 16, incorporated into the fuselage 14 of the vehicle 10 or aircraft 12. The cabin window 16 is not limited to use with an aircraft 12, but could be implemented on various forms of vehicles or other enclosures subject to pressure changes, such as buses, trains, ships, and buildings. However, the structural and operational properties of the window arrangement 16, as discussed below, are particularly well suited for use with an aircraft 12 (e.g., a jet aircraft), where the window arrangement 16 is exposed to significant changes in air pressure and thermal conditions. By way of example, an aircraft when at cruising altitude typically experiences an external temperature of around -50° C, while the interior of the aircraft is typically maintained at a temperature of about 20° C, and thus the gradient of temperature is negative from the cabin to the outside or exterior of the aircraft. Further, most commercial aircraft fly at a cruising altitude of about 12,800 m to 13,720 m where the external air pressure is around 29.6 kPa as compared to the air pressure at sea level of about 101.3 kPa.

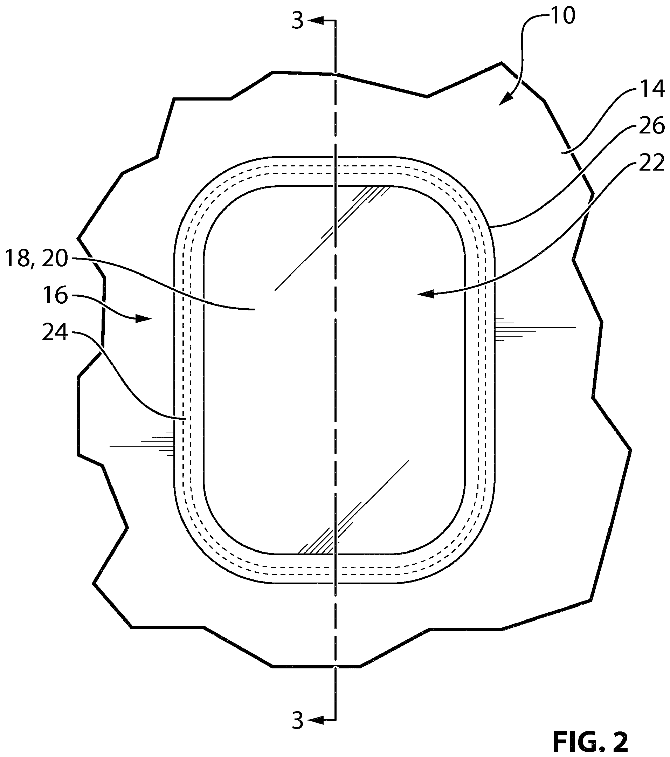

With brief reference to FIG. 2, a front view of a window arrangement 16 from the outside of the vehicle 10 integrated into the fuselage 14 is schematically shown. The window arrangement 16 includes two or more transparent members 18, 20 arranged in an opening 22 of the fuselage 14 and a flexible seal 24 circumscribing the opening 22. The term "transparent" is intended to encompass various materials that allow light to pass through, such as clear materials, translucent materials, electro-chromatic materials and other light-transmitting materials. It is contemplated that the window arrangement 16 may comprise a double-pane construct or a multi-pane construct (e.g., a three-pane system). Additionally or alternatively, the window arrangement 16 may comprise a multi-layer construct including an outboard laminate structure having a solid interlayer between two or more plies of glass, acrylic, polycarbonate or other suitable materials and an inboard pane or layer arranged in spaced apart relation to the outboard laminate structure. The flexible seal 24 extends continuously around the opening 22 to hermetically seal an interspace between the transparent members 18, 20 to prevent humid outside air from entering. The window arrangement 16 is mounted on the fuselage 14 by a window frame 26 bordering the opening 22 in which the window arrangement 16 is installed, and the transparent members 20, 22 may be suspended within the frame 26.

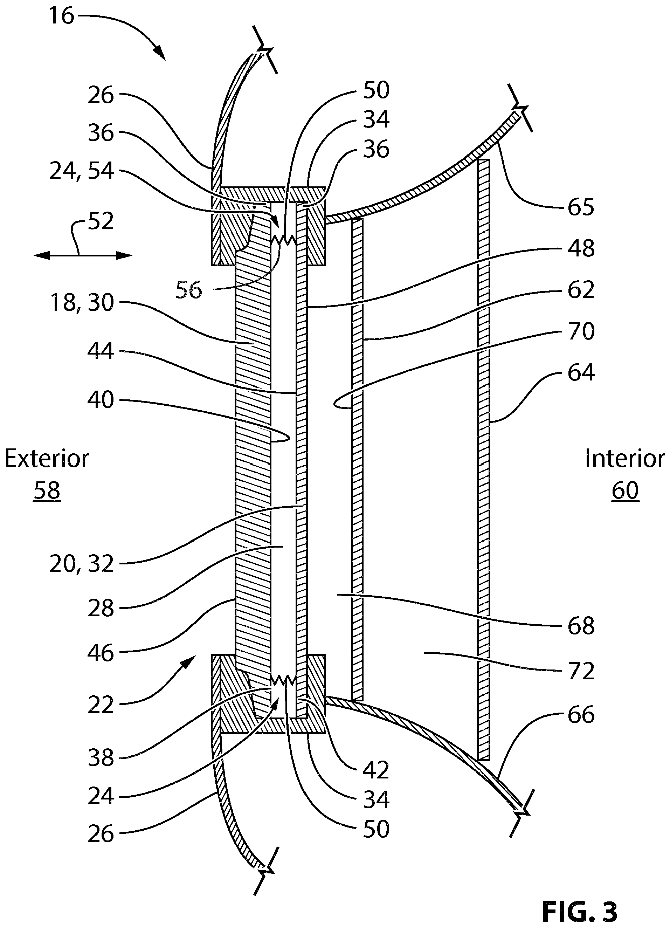

FIG. 3 shows a cross-sectional view of the window arrangement of FIG. 2 according to an example. The window arrangement 16 includes a first transparent member 18, a second transparent member 20 spaced at a distance from the first transparent member 18, a flexible seal 24 interposed between the first transparent member 18 and the second transparent member 20, and a sealed variable volume enclosure 28 provided in the interspace therebetween. The first transparent member 18 and/or the second transparent member 20 may be a structural pane, a completion or scratch pane, a laminate or a ply material, or a combination thereof, and respectively have a single layer construction or a multi-layer construction. The transparent members 18 and/or 20 may be composed of a deformable material, e.g., acrylic, a transparent polymer and/or polycarbonate, to increase its load bearing ability and reduce the risk of failure. It will be appreciated that other materials may be used without departing from the present disclosure, such as glass and ceramics.

The first transparent member 18 may be an outboard transparent member and the second transparent member 20 may be an inboard transparent member, in relation to the sealed enclosure 28. In the illustrated example, the first transparent member 18 is an outboard structural pane 30, for pressurization pressure resistance that maintains the cabin pressure within the vehicle 10. According to an implementation, the outboard structural window pane 30 comprises a structural window pane of a thickness and material that complies with the aviation industry's standard safety factors regarding pressure and impact resistance, such as a pane made of acrylic material. According to another implementation, the outboard structural window pane 30 comprises a laminate structure having two or more plies or layers connected or laminated together by a solid interlayer. For example, the laminate structure may include an acrylic or glass pane connected to a Lexan type polycarbonate pane by a flexible adhesive, such as a polyurethane material, to minimize transfer of loads between the panes and to reduce crack propagation. For the laminate structure, an outboard ply serves for pressure resistance and an inboard ply provides redundancy for fail-safe protection. For example, if a crack should form in the outboard ply of the outboard structural pane 30, then an inboard ply of the outboard structural pane 30 will take over the structural loads. One or more inboard plies of the outboard structural pane 30 are formed as redundant structural panes with sufficient strength to carry the pressure load should the outboard ply of the outboard structural pane 30 fail (e.g., a fail-safe design). Accordingly, reference made herein to the outboard structural window pane 30 is intended to encompass a single ply and a laminated structure having multiple plies.

The second transparent member 20 is an inboard pane 32, and may be implemented as a structural pane or laminate, a scratch pane or laminate (also referred to as a completion pane or laminate that protects against internal attacks by passengers), or another type of thin transparent member. As should be apparent to a skilled artisan, the outboard structural pane 30 has characteristics that permit it, or one of its plies, to carry all the structural load, including the air pressure within the vehicle 10 and outside of the fuselage 14. Additionally or alternatively, the inboard pane 32 may be formed as a redundant structural pane with sufficient strength to carry the pressure load should the outboard structural pane 30 fail (e.g., a fail-safe design). According to an implementation, the outboard transparent member 18 or respectively the outboard structural pane 30 has the same or substantially the same thickness as the inboard transparent member 20 or respectively the inboard structural pane 32. According to another implementation, the outboard transparent member 18 or respectively the outboard structural pane 30 has a different thickness as compared to the inboard transparent member 20 or respectively the inboard structural pane 32. For example, the inboard transparent member 20 or inboard pane 32 may be formed thinner than the outboard transparent member 20 or respectively the outboard structural pane 30 to facilitate relative movements and displacement of the inboard member or pane 20, 32 with respect to the outboard member or pane 18, 30. This may reduce the overall weight of the window arrangement 16, and thus improve the fuel efficiency of the vehicle 10, while still providing a fail-safe design. The outboard structural pane 30 and the inboard pane 32 are arranged in the opening 22 and secured to the frame 26 by a retainer member 34, such as an annular retainer clip. The retainer member 34 surrounds an external periphery or profile of the flexible seal 24 and guides the flexible seal 24 during expansion and contraction movements of the sealed enclosure 28, as discussed in more detail below.

The flexible seal 24 joins the outboard structural pane 30 and the inboard pane 32 around a perimeter 36 of the panes 30 and 32 defined by a peripheral edge of an inboard surface 40 of the outboard pane 30 and an outboard surface 44 of the inboard pane 32, thereby providing a sealed connection bridging the distance or interspace between the panes 30 and 32. The flexible seal 24 may be composed of a flexible, resilient sealant material that prevents humid outside air and moisture from entering the sealed enclosure 28, and that permits relative movement between the outboard structural pane 30 and the inboard pane 32. The flexible seal 24 extends continuously around the perimeter 36 of the outboard structural pane 30 and the inboard pane 32 to surround and hermetically seal the variable volume enclosure 28. The flexible seal 24 may be attached to the outboard structural pane 30 and the inboard structural pane 32 via an adhesive and/or a mechanical joint. The adhesive may be any adhesive material that is suitable for the rigors of flight (e.g., resistance to vibrations and/or extreme temperature fluctuations) provided that the material maintains an adhesive connection or bond between the flexible seal 24 and the corresponding window pane 30, 32 within predefined thresholds. As merely one non-limiting example, the adhesive material may be polyvinyl butyral or like material that provides strong binding, toughness and flexibility. Pursuant to an implementation, the flexible seal 24 may have an outboard face 38 adhesively joined to the inboard surface 40 of the outboard structural pane 30 and an inboard face 42 adhesively joined to the outboard surface 44 of the inboard pane 32. The mating faces 38, 42 of the flexible seal 24 and/or the mating surfaces 40, 44 of the panes 30 and 32 may have a surface texture (not shown), such as a surface roughening or a pattern of protrusions, to improve the adhesive connection. It is also contemplated that the flexible seal 24 may have a lip or extension (not shown) extending from the outboard face 38 and/or the inboard face 40 over and outwardly around the perimeter 36 of the panes 30 and 32 (e.g., away from the enclosure 28) that engages at least a portion of an outboard surface 46 of the outboard structural pane 30 and an inboard surface 48 of the inboard pane 32, respectively (e.g., the lip(s) may have an L-shaped cross section). The retainer member 34 may then clamp the lip(s) against the outboard structural pane 30 and/or the inboard structural pane 32 to provide a mechanical connection for the flexible seal 24.

The flexible seal 24 has an elastically mobile sealing body 50 structured and arranged to permit relative movement between the inboard pane 30 and the outboard pane 32. The sealing body 50 is configured to extend and contract during the expansion and compression movement of the sealed enclosure 28. For example, the sealing body 50 may extend and contract in an inboard and outboard direction or movement 52 to allow a change in volume of the sealed enclosure 28. Pursuant to one implementation, the sealing body 50 moves translationally, in particular a generally rectilinear motion, along the inboard and outboard direction 52 to reduce the amount of moving parts and the complexity of the sealed enclosure 28. The flexible seal 24 and/or the sealing body 50 is composed of a flexible, resilient material that is air-tight and prevents the ingress of moisture or other contaminants into the enclosure 28, such as an elastomeric plastic material. According to one implementation, the sealing body 50 may be a flexible polymeric closed cell foam, e.g., an elastomeric foam with a closed-cell structure, such as polyvinyl chloride foam. It will be appreciated that other closed-cell materials may be used for the sealing body 50, including but not limited to closed-cell materials based on foamed plastics such polyolefin, polystyrene, or polyurethane, provided that the closed-cell structure is impermeable to moisture (e.g., water vapor) and air or other gases. The sealing body 50 composed of a closed-cell foam has bellows-like characteristics that permit a significant degree of movement before the movement is arrested to allow the flexible seal 24 to extend and contract within predefined thresholds for changing the volume of the enclosure 28. For example, the closed-cell foam may have a linear elasticity that facilitates uni-axial motion in a plane perpendicular to and intersecting the outboard structural pane 30 and the inboard structural pane 32 (e.g., in the inboard and outboard direction 52), while restricting motion laterally or in a plane parallel to the panes 30 and 32.

Additionally or alternatively, the flexible seal 24 may be implemented as a bellows member 54, as shown in the example illustrate of FIG. 3. The bellows member 54 has a concertinaed sealing body 50 to facilitate extension and contraction movements in the inboard and outboard direction 52. The bellows member 54 includes a plurality of convolutions 56 defined by ridge-like folds and valley-like folds formed in an alternating and continuous manner between the outboard structural pane 30 and the inboard structural pane 32. The convolutions 56 of ridge-like and valley-like folds are oriented transversely to the inboard and outboard direction 52 to facilitate displacing at least one of the outboard structural pane 30 and the inboard structural pane 32 inwards and/or outwards during an expansion and compression movement of the sealed enclosure 28. Additionally, the retaining member 34 may be positioned around an external surface or profile of the bellows member 54 and serve to guide the bellows member 54 during the extension and contraction movements. The retaining member 34 may have a U-shaped cross section that receives at least part of the flexible seal 24 and the perimeter 36 of the outboard and inboard structural panes 30, 32. Further, the retaining member 34 may restrain movement of the bellows member 54 to translational, substantially linear motion in the inboard and outboard direction 52, and thus may resist any tendency that the bellows member 54 may have to bulge laterally or transversely to the inboard and outboard direction 52. The bellows member 54 may be preferable in certain circumstances where the window arrangement 16 must compensate for significant pressure changes within the vehicle 10, for example a window arrangement 16 incorporated into a military aircraft or a business aircraft that fly at a cruising altitude higher than that of a passenger aircraft. The structure of the bellows member 54 may permit the concertinaed sealing body 50 to extend further inwards than the closed-cell foam, thereby permitting a greater expansion of the sealed enclosure 28 to compensation for the decrease in cabin pressure owing to the ascent to the higher cruising altitude.

The flexible seal 24 hermetically seals the sealed variable volume enclosure 28 in the interspace between the outboard structural pane 30 and the inboard structural pane 32 in a manner that prevents the sealed enclosure 28 from exchanging gas with an exterior 58 (e.g., the outside environment) and a cabin interior 60. The sealed enclosure 28 is filled with a gas substantially devoid of moisture. The gas may include, but is not limited to, dry air, nitrogen, argon, helium, and carbon dioxide. The gas functions to remove the primary culprit of fog and frost formation on the window arrangement, which is water or moisture. The sealed enclosure 28 may also contain a drying agent such as a desiccant material to further reduce residual moisture that may be trapped in the enclosure 28 (e.g., due to assembly and/or moisture in the relatively dry air). The sealed enclosure 28 is bounded by the outboard structural pane 30, the inboard structural pane 32, and the flexible seal 24 that joins the outboard structural pane 30 and the inboard structural pane 32 at a perimeter thereof. According to the shown implementation, the inboard surface 40 of the outboard structural pane 30 delimits the sealed enclosure 28 towards an exterior 58, the outboard surface 44 of the inboard structural pane 32 delimits the sealed enclosure 28 towards a cabin interior 60, and the flexible seal 24 delimits the sides of the sealed enclosure 28 (e.g., laterally or transversely to the inboard and outboard direction 52), whereby the sealed enclosure 28 is airtight and impermeable to moisture. As such, there is no gas exchange into and out of the sealed enclosure 28, and therefore the amount of gas (e.g., the mass of the gas) is fixed. By sealing the enclosure 28 containing a gas purged substantially of moisture, the sealed enclosure 28 functions as a thermal barrier between the outboard pane 30 and the inboard pane 32 where substantially no moisture is present. This, in turn, maintains the temperature of the inboard surface 48 of the inboard pane 32 at or above the dew point of the cabin air and facilitates the prevention of undesirable condensation from forming on the inboard pane 32, providing a clear view through the window. The sealed enclosure 28 further facilitates the prevention of undesirable condensation from forming on the inboard surface 40 of the outboard structural pane 30 because no moisture is present in the enclosure 28 due to the gas contained therein and the hermetically sealed, moisture impermeable configuration. Additionally, the sealed enclosure 28 facilitates reductions of vibration and acoustic noise through the insulating characteristics of the gas-filled volume of the enclosure 28 and the damping properties of the flexible seal 24 that may absorb vibrational energy of the window arrangement 16outboardinboardinboard.

It is contemplated that the sealed enclosure 28 may include sub-chambers (not shown) or respectively plural gas-filled gaps to facilitate improvements in thermal resistance and insulation. For example, the enclosure 28 may include an intermediate pane or layer (not shown) arranged between the outboard pane 30 and the inboard pane 32. The intermediate pane may be connected to the outboard pane 30 by a first flexible seal and is spaced-apart by a gas-filled gap to define a first hermetically sealed sub-chamber. Further, the intermediate pane may be connected to the inboard pane 32 by a second flexible seal and is spaced-apart by a gas-filled gap to define a second hermetically sealed sub-chamber. The sub-chambers may be sealed off from one another, or in fluid communication with one another provided that the total volume of the enclosure 28 is sealed off from the surroundings. The provision of several thin gas-filled gaps may increase the thermal resistance properties of the enclosure 28 as compared to a single gas-filled gap of an equivalent total thickness.

It is contemplated that the window arrangement 16 may also include one or more completion or scratch panes, such as an outboard completion pane 62 and an inboard completion pane 64 as shown in the non-limiting example of FIG. 3. The outboard completion pane 62 and the inboard completion pane 64 are disposed within a window reveal 66. The outboard completion pane 62 is disposed within the window reveal 66 proximate to the inboard structural pane 32, and the inboard completion pane 64 is arranged distally from the inboard structural pane 32 and closer to the cabin interior 60 than is the outboard completion pane 62. The inboard structural pane 32 is separated from the outboard completion pane 62 by a gap 68 defined between the inboard surface 48 of the inboard structural pane 32, an outboard surface 70 of the outboard completion pane 62, and the window reveal 66, and the inboard completion pane 64 is separated from the outboard completion pane 62 by another gap 72.

In operation, the window arrangement 16 is acted on by various loads due to pressure changes in the interior 60. When the vehicle 10 is subjected to a pressure change, a pressure gradient forms between the sealed enclosure 28 and the interior 60. If the vehicle 10 is subjected to an increase in pressure, the air within the interior 60 applies an outboard acting force against the window arrangement 16 and the sealed enclosure 28 retracts or contracts. Conversely, if the vehicle 10 is subjected to a decrease in pressure, the gas within the enclosure 28 expands. To equalize pressure between the interior 60 and the enclosure 28 according to the present disclosure, the window arrangement 16 allows the enclosure 28 to change its volume in response to a pressure change in the interior 60. That is, the change in pressure within the interior 60 is compensated by a change in volume within the enclosure 28. The change in volume within the enclosure 28 in response to the change in pressure within the interior 60 maintains a substantially neutral pressure between the enclosure 28 and the interior 60 that mitigates and may even prevent the formation of a pressure gradient due to the pressure change within the interior 60. The varying volume of the enclosure 28 avoids stressing the inboard structural pane 32 and directs the pressure load onto one or more plies of the outboard structural pane 30. For at least these reasons, the inboard structural pane 32 may be formed thinner than conventional window panes, and thinner than the outboard structural pane 30, to facilitate expansion and compression of the enclosure 28 to vary the volume therein. Accordingly, the structural integrity of the window arrangement 16 is preserved because the outboard structural pane 30 still bears the load of the pressure within the interior 60 and the inboard structural pane 32 provides a fail-safe for increased reliability.

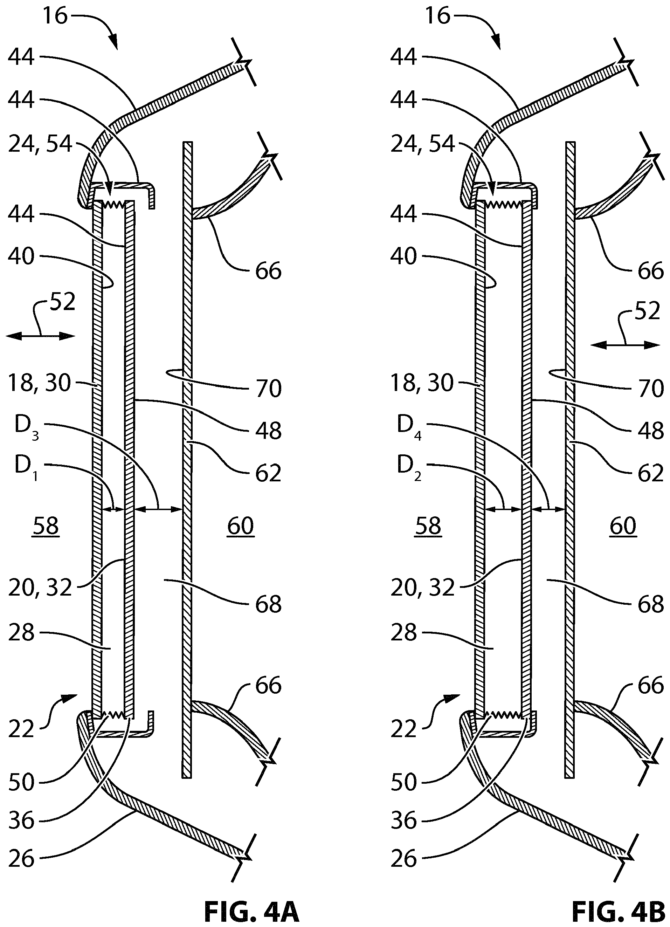

In one example, the window arrangement 16 is incorporated into a fuselage 14 of an aircraft. As the aircraft 12 ascends, the air pressure within the cabin interior 60 reduces, and the enclosure 28 expands (which may be mitigated by a decrease in external temperature during ascent) and the volume within the enclosure 28 increases (and thus the pressure within the enclosure 28 decreases) to stabilize internal air pressure levels within the enclosure 28 and the cabin interior 60. When the aircraft 12 descends, the air pressure within the cabin interior 60 increases, and the enclosure 28 contracts (which may be mitigated by an increase in external temperature during descent) and the volume within the enclosure 28 decreases (and thus the pressure within the enclosure 28 increases) to stabilize internal air pressure levels within the enclosure 28 and the cabin interior 60. The mechanics allowing the window arrangement 16 to compensate for pressure changes is perhaps best illustrated in FIGS. 4A and 4B.

FIGS. 4A and 4B illustrate a schematic cross-sectional view of the window arrangement 16, wherein FIG. 4A represents an example of the sealed variable volume enclosure 28 in a first position and FIG. 4B represents an example of the sealed variable volume enclosure 28 in a second position. The first position of the enclosure 28 may represent a compressed state of the enclosure 28 where a first distance D₁, also referred to as a resting enclosure distance or an initial enclosure distance, is defined between the inboard surface 40 of the outboard structural pane 30 and an outboard surface 44 of the inboard structural pane 32, and the first distance D₁ defines a first volume, also referred to as a resting volume, of the enclosure 28. The second position of the enclosure 28 may represent an expanded state of the enclosure 28 where a second distance D₂, also referred to as a displaced enclosure distance, is defined between the inboard surface 40 of the outboard structural pane 30 and an outboard surface 44 of the inboard structural pane 32, and the second distance D₂ defines a second volume. If the window arrangement 16 is implemented as a three-pane (or more) system, the first position of the enclosure 28 may also define a third distance D₃ between the outboard surface 48 of the inboard structural pane 32 and an inboard surface 70 of an adjacent completion pane (e.g., the inboard completion pane 62). Further, the second position of the enclosure 28 may define a fourth distance D₄ between the outboard surface 48 of the inboard structural pane 32 and an inboard surface 70 of an adjacent completion pane (e.g., the inboard completion pane 62). As will be made clear below, the first distance D₁ is less than the second distance D₂ (D₁ < D₂), and the third distance D₃ is greater than the fourth distance D₄ (D₃ > D₄).

The change in volume of the enclosure 28 is facilitated by the structure and arrangement of the flexible seal 24. The flexible seal 24, shown as a bellows member 54 in the illustrated examples, has a sealing body 50 that extends and contracts to permit relative movement between the outboard structural pane 30 and the inboard structural pane 32 to vary the volume of the enclosure 28 and compensate for pressure changes within the cabin interior 60. As the pressure within the cabin interior 60 decreases, for example during an ascent phase in flight, the inboard structural pane 32 is displaced inwards (inboard) in a linear movement along the inboard and outboard direction 52 by a displacement distance ΔD. The inward displacement of the inboard structural pane 32 increases the volume of the enclosure 28 to compensate for the decrease in air pressure within the cabin interior 60. As such, the enclosure 28 transitions from the first position shown in FIG. 4A to the second position shown in FIG. 4B, and hence the distance defined by the enclosure 28 increases from the first distance D₁ to the second distance D₂. The increase in distance from the first distance D₁ to the second distance D₂ correlates to an increase in volume of the enclosure 28 and a decrease in pressure within the enclosure 28 to compensate for the decrease in pressure within the cabin interior 60. As the pressure within the cabin interior 60 increases, for example during a descent phase in flight, the inboard structural pane 32 is displaced outwards (outboard) in a linear movement along the inboard and outboard direction 52 by a displacement distance ΔD. The outward displacement of the inboard structural pane 32 decreases the volume of the enclosure 28 to compensate for the increase in air pressure within the cabin interior 60. As such, the enclosure 28 transitions from the second position shown in FIG. 4B to the first position shown in FIG. 4A, and hence the distance defined by the enclosure 28 decreases from the second distance D₂ to the first distance D₁. The decrease in distance from the second distance D₂ to the first distance D₁ correlates to a decrease in volume of the enclosure 28 and an increase in pressure within the enclosure 28 to compensate for the increase in pressure within the cabin interior 60. Due to the structure and arrangement of the flexible seal 24, the inboard structural pane 32 is moved translationally as a unit in the inboard and outboard direction and the edges or perimeter 36 of the inboard structural pane 32 is displaced the same or substantially same distance (e.g., the displacement distance ΔD) as the center of the inboard structural pane 32. Further, the flexible seal 24 maintains the sealed connection between the outboard structural pane 30 and the inboard structural pane 32 during the expansion and compression movement of the inboard structural pane 32 to change the volume within the enclosure 32 without an exchange of gas (e.g., the amount or mass of gas is fixed within the enclosure 28). It will be appreciated that the enclosure 28 is adjustable dynamically between one or more intermediate positions between the resting enclosure distance shown in FIG. 4A and the displaced enclosure distance shown in FIG. 4B to compensate for pressure changes.

The displacement distance ΔD is measured as the difference between the distance of the inboard surface 40 of the outboard transparent member 30 from the outboard surface 44 of the inboard transparent member 32 in the first position and in the second position. Thus, the displacement distance ΔD may be represented by the relationship ΔD = D₂ - D₁. Further, the displacement distance ΔD may be represented as a percentage, for example according to the relationship ΔD = (D₂ - D₁)/D₁ x 100. The displacement distance ΔD correlates to a volume change within the enclosure 28 and is proportional to a pressure change in the cabin interior 60. According to an implementation, the displacement distance ΔD is up to approximately 15%-25% (± 1%) of distance D₁. According to a further implementation, the displacement distance ΔD is up to approximately 16% - 23% (± 1%) of D₁. The change in volume of the enclosure 28 between the first position and the second position is, according to an implementation, up to approximately 15% - 25% (± 1%) of the volume of the enclosure 28 at D₁, e.g., a volume change of approximately 15-25% from the resting volume. According to a further implementation, the change in volume of the enclosure 28 between the first position and the second position is up to approximately 15%-20% of the volume of the enclosure 28 at D₁. The ranges for the change in volume and the displacement distance ΔD are representative of threshold values to maintain the structural integrity of the enclosure 28 and the window arrangement 16. The ranges detailed above may likewise represent threshold tolerances for the flexible seal 24, which needs to tolerate a significant degree of movement to safely permit displacement of the inboard structural pane 32 between the first position and the second position, and for the adhesive material to maintain a structurally sound connection between the flexible seal 24 and the corresponding window pane 30, 32. As such, the flexible seal 24 is structured and arranged to permit a change in the resting enclosure distance D₁ by up to approximately 15-25%, and/or to permit a volume change of the enclosure 28 by up to approximately 15-25% from the resting volume. A value exceeding the upper limit of the ranges may dislodge the flexible seal 24, may break the adhesive bond between the flexible seal 24 and the window panes 30, 32, and/or exceed the elastically resilient capacity of the flexible seal 24 causing it to rupture or otherwise fail.

As merely one non-limiting example of the dimensional values of the enclosure 28, the first distance D₁ is 25.4 mm (1 inch) and the displacement distance ΔD is 6 mm (0.23 inch).

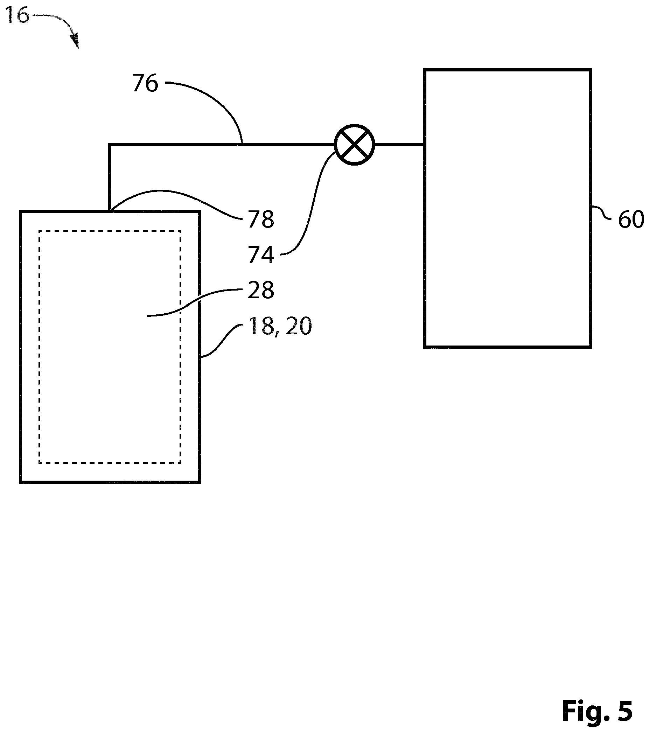

With brief reference to FIG. 5, there is shown schematically a window arrangement 16 having a fail-safe mechanism or means to protect the flexible seal (not shown) against failure according to an example. The fail-safe mechanism may be employed in situations such as emergency depressurization or sudden decompression. Emergency depressurization and sudden decompression are both events related to a rapid pressure drop in an area of the aircraft cabin maintained at an elevated pressure during flight. The fail-safe mechanism may include a pressure safety valve 74 that compensates for abrupt changes in pressure by opening a passage 76 between the enclosure 28 and the cabin interior 60 in response to a pressure within the enclosure 28 exceeding a predefined pressure threshold. The passage 76 may lead into the enclosure 28 via a channel or orifice 78 disposed in the flexible seal (not shown), the first transparent member 18, or the second transparent member 20. According to one implementation, the predefined pressure threshold is a pressure change within the enclosure 28 of approximately 25% (± 1%). According to another implementation, the predefined pressure threshold is a pressure change within the enclosure 28 of approximately 20% (± 1%).

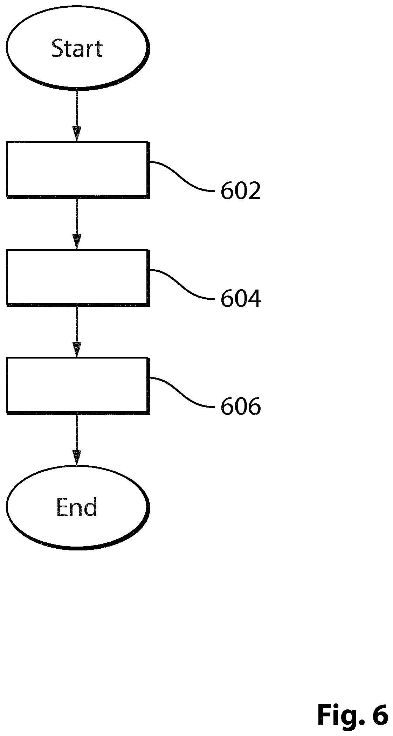

FIG. 6 is a flow chart illustrating an example method for reducing condensation on a window arrangement of a vehicle subject to pressure changes. At step 602, a hermetically sealed enclosure containing a fixed amount of gas is provided that is bounded by an inboard pane and an outboard pane sealingly connected via a flexible seal. At step 604, a distance between the inboard pane and the outboard pane is expanded to increase a volume of the hermetically sealed enclosure in response to a decrease in air pressure within the interior of the vehicle. At step 606, the distance between the inboard pane and the outboard pane is compressed to reduce the volume of the hermetically sealed enclosure in response to an increase in air pressure within the interior of the vehicle.

According to an implementation, the vehicle is an aircraft and the interior is a cabin interior.

According to another implementation, the step 602 may include filling the enclosure with a gas including dry air or nitrogen to purge moisture from within the enclosure.

According to another implementation, the step 604 includes displacing the inboard pane inwards from the outboard pane along an inboard translational movement by a displacement distance to increase the volume of the enclosure proportionally to the decrease in air pressure within the interior of the vehicle. The displacement distance may reach up to approximately 15%-25% (± 1%) of the resting distance between the inboard and outboard panes. More specifically, the displacement distance may be approximately 16%-23% (± 1%) of the resting distance between the inboard and outboard panes.

Additionally or alternatively, the step 606 includes displacing the inboard pane outwards from the interior towards the outboard pane along an outboard translational movement by the displacement distance to decrease the volume of the enclosure proportionally to the increase in air pressure within the interior of the vehicle.

In steps 604 and 606, the flexible seal maintains a sealed connection between the inboard pane and the outboard pane during the inboard translational movement and the outboard translational movement.

It will be appreciated that the aforementioned window arrangement 16 and/or method 600 may be modified to have some components and steps removed, or may have additional components and steps added, all of which are deemed to be within the spirit of the present disclosure. For example, while the sealed enclosure 28 was described as being constituted by an outboard structural pane 30 and an inboard pane 32, it is contemplated that the sealed enclosure 28 may by constituted by an inboard pane or ply and an outboard completion pane. As another example, the method 600 may be implemented such that step 606 comes before step 604. Accordingly, even though the present disclosure has been described in detail with reference to specific examples, it will be appreciated that the various modifications and changes can be made to these examples without departing from the scope of the present disclosure as set forth in the claims. It is anticipated and intended that future developments will occur in the technologies discussed herein, and that the disclosed method, device and/or article will be incorporated into such future developments. Thus, the specification and the drawings are to be regarded as an illustrative thought instead of merely restrictive thought.

As used herein, spatial or directional terms such as "inboard," outboard," "top," "bottom," "upper," "lower," "up," "down," and the like, relate to the illustrations shown in the figures and are not to be considered as limiting. Further, all numbers expressing dimensions, ratios and the like, used in the specification and claims, are to be understood to encompass tolerances and other deviations as represented by the term "about" or "approximately." Moreover, all ranges disclosed herein are to be understood to encompass any and all sub-ranges subsumed therein.

All terms used in the claims are intended to be given their broadest reasonable constructions and their ordinary meanings as understood by those knowledgeable in the technologies described herein unless an explicit indication to the contrary in made herein. In particular, use of the singular articles such as "a," "the," "said," etc. should be read to recite one or more of the indicated elements unless a claim recites an explicit limitation to the contrary. Further, the use of "at least one of" is intended to be inclusive, analogous to the term and/or. Additionally, use of adjectives such as first, second, etc. should be read to be interchangeable unless a claim recites an explicit limitation to the contrary.

## Claims

1. A window arrangement (16) for a vehicle subject to pressure changes, comprising:
a first transparent member (18) and a second transparent member (20) spaced apart from one another;
a flexible seal (24) interposed between the first transparent member (18) and the second transparent member (20);
a hermetically sealed variable volume enclosure (28) sealed off from a cabin interior, the hermetically sealed variable volume enclosure bounded by the first transparent member (18), the second transparent member (20), and the flexible seal (24) joining the first transparent member and the second transparent member wherein the hermetically sealed variable volume enclosure (28) defines a resting enclosure distance (Di) between mutually opposite surfaces of the first transparent member and the second transparent member; and
wherein the flexible seal (24) has an elastically mobile body (50) structured and arranged to permit relative movement between the first transparent member (18) and the second transparent member (20) to change the resting enclosure distance (Di) in response to a pressure change in the cabin interior.

2. A window arrangement (16) as claimed in claim 1, wherein the flexible seal (24) is structured and arranged to permit a change in the resting enclosure distance (Di) of approximately 15-25%.

3. A window arrangement (16) as claimed in claim 1 or claim 2, wherein the second transparent member (20) is disposed inboard of the first transparent member (18) with respect to the cabin interior, and wherein the second transparent member (20) is movable translationally in an inboard direction via the flexible seal (24) to increase the resting enclosure distance (Di) in response to a pressure decrease within the cabin interior.

4. A window arrangement (16) as claimed in any preceding claim, wherein the flexible seal (24) comprises:
a closed-cell foam material; or
a bellows member (54) including a plurality of convolutions.

5. A window arrangement (16) as claimed in claim 4, comprising a retaining member (34) surrounding an external periphery of the bellows member (54), wherein the bellows member is restrained to translational movement in an inboard and outboard direction via the retaining member (34).

6. A window arrangement as claimed in any preceding claim, wherein the hermetically sealed variable volume enclosure (28) is filled with a gas, and wherein the gas includes at least one of air and nitrogen;
optionally wherein an amount of the gas within the hermetically sealed variable volume enclosure (28) is fixed.

7. A window arrangement (16) as claimed in any preceding claim, wherein the first transparent member (18) is an outboard window member and the second transparent member (20) is an inboard window member, and wherein the inboard window member is movable translationally in an inboard and outboard direction to change a volume within the hermetically sealed variable volume enclosure (28) in response to the pressure change within the cabin interior.

8. A window arrangement (16) as claimed in claim 7, wherein the flexible seal (24) is structured and arranged to permit a volume change of approximately 15-25% from a resting volume defined at the resting enclosure distance (D₁).

9. A window arrangement (16) as claimed in claim 7 or claim 8, wherein the inboard window member (18) is displaced inboard in a linear movement to increase the volume within the hermetically sealed variable volume enclosure (28) in response to a pressure decrease in the cabin interior.

10. A window arrangement (16) as claimed in any one of claims 7 to 9, wherein the outboard window member (20) is a laminate structure having at least two plies and the inboard window member (18) is a window pane.

11. A window arrangement as claimed in any one of claims 7 to 9, wherein the outboard window member (20) comprises an outboard structural pane and the inboard window member (18) is an inboard structural pane, and wherein the outboard structural pane has a thickness greater than that of the inboard structural pane.

12. An aircraft comprising:
a fuselage (14) defining a cabin interior subject to pressure changes;
at least one window arrangement (16) suspendable within a frame, the at least one window arrangement including:
an inboard transparent member (18) and an outboard transparent member (20) spaced from one another;
a flexible seal (24) interposed between the inboard transparent member (18) and the outboard transparent member (20), the flexible seal (24) joining the inboard transparent member and the outboard transparent member, wherein the flexible seal has an elastically mobile body (50) structured and arranged to permit relative movement between the inboard transparent member (18) and the outboard transparent member (20); and
a hermetically sealed gas-filled variable volume enclosure (28) sealed off from the cabin interior, the variable volume enclosure (28) bounded by the inboard transparent member (18), the outboard transparent member (20), and the flexible seal (24) that provides a sealed connection between the inboard transparent member and the outboard transparent member;
wherein the flexible seal (24) is structured and arranged to maintain the sealed connection for an inboard and outboard movement of the inboard transparent member (18) to change a volume of the variable volume enclosure (28) in response to a pressure change in the cabin interior.

13. An aircraft as claimed in claim 12, wherein the variable volume enclosure (28) defines a first volume in a first position where the inboard transparent member (18) is spaced from the outboard transparent member (20) by an initial enclosure distance (D₁), and a second volume in a second position where the inboard transparent member (18) is displaced from the outboard transparent member (20) by a displacement distance (D₂), and wherein the inboard transparent member (18) moves translationally as a unit between the first position and the second position in response to the pressure change in the cabin interior.

14. An aircraft as claimed in claim 12 or claim 13, wherein the outboard transparent member (20) is an outboard structural pane and the inboard transparent member (18) is an inboard structural pane, the at least one window arrangement (16) further including a completion pane (64) spaced inwards from the inboard structural pane by an air gap.

15. An aircraft as claimed in any one of claims 12 to 14, wherein the at least one window arrangement (16) includes a pressure safety valve (74) configured to open a passage between the variable volume enclosure (28) and the cabin interior in response to a pressure change within the variable volume enclosure exceeding a predefined pressure threshold, and wherein the predefined pressure threshold is approximately 25%.
